# EUROPÄISCHE PATENTSCHRIFT

(11) **EP 0 691 884 B1**
(45) Veröffentlichungstag und Bekanntmachung des Hinweises auf die Patenterteilung: **12.08.1998**
(21) Anmeldenummer: 95905122.8
(22) Anmeldetag: 05.01.1995
(51) Int. Cl.: B01J 2/20, B01J 2/26

(54) **VORRICHTUNG ZUR HERSTELLUNG VON GRANULAT**
DEVICE FOR PRODUCING A GRANULATED MATERIAL
DISPOSITIF POUR PRODUIRE DES GRANULES

(30) Priorität: 29.01.1994 DE 4402722
(43) Veröffentlichungstag der Anmeldung: 17.01.1996
(73) Patentinhaber: Santrade Ltd., CH-6002 Luzern (CH)
(72) Erfinder: FROESCHKE, Reinhard, D-71384 Weinstadt-Beutelsbach (DE)
(74) Vertreter: Wilhelm, Hans-Herbert, Dr.-Ing.
(86) Internationale Anmeldenummer: EP9500038
(87) Internationale Veröffentlichungsnummer: WO9520433

(56) Entgegenhaltungen:
- EP-A- 0 134 944
- DE-C- 948 598
- FR-A- 1 327 272

## Beschreibung

Die Erfindung betrifft eine Vorrichtung zur Herstellung von Granulat aus fließfähigen, viskosen Massen, die in Tropfenform gebracht werden und erstarren oder gelieren, bestehend aus einem mit der fließfähigen Masse beschickten Behälter mit Ausflußöffnungen, die zur Tropfenbildung intermittierend durch ein periodisch daran vorbeigeführtes perforiertes Band geöffnet oder geschlossen werden.

Eine derartige Vorrichtung ist aus der EP 0 134 944 B1 bekannt, bei welcher ein endloses umlaufendes Band an zwei Umlenktrommeln geführt wird. Um eine ausreichend große Elastizität beim Umlauf und zum Anliegen an dem Behälter zu erhalten, handelt es sich bei dem umlaufenden Band um ein Kunststoffband, beispielsweise aus PVC. Kunststoffbänder unterliegen jedoch einem verhältnismäßig hohen Verschleiß und altern auch verhältnismäßig schnell, was dazu führen kann, daß ein mit Produktionsausfall verbundener häufiger Bandwechsel vorgesehen werden muß, oder daß das Band nach längerer Betriebszeit nicht mehr fest genug an dem Austrittsschlitz des Behälters anliegt, so daß eine ungenügende Funktion eintreten kann, wenn nicht laufend die Bandspannung nachgestellt wird.

Der Erfindung liegt die Aufgabe zugrunde, ein Band zur Verfügung zu stellen, das stabil ist, nahezu keinen Alterungserscheinungen unterliegt und das nicht die Probleme von elastisch nachgiebigen Bändern aufweist.

Zur Lösung dieser Aufgabe werden bei einer Vorrichtung der eingangs genannten Art die kennzeichnenden Merkmale des Patentanspruch 1 vorgesehen.

Durch die erfindungsgemäße Ausführung des Bandes aus einer Vielzahl von lamellenartigen Gliedern, die elastisch verbunden sind und somit beim Vorbeilaufen am Behälter eng aneinander anliegen, ist ein Band mit den gewünschten Bandeigenschaften bereitgestellt. Zum einen weist das Band eine ausreichend große Biegsamkeit auf, die aufgrund der relativ kleinen Abmessungen der Umlenktrommeln der eingangs genannten Vorrichtungen nötig ist. Zum anderen lassen sich die einzelnen lamellenartigen Glieder dick genug ausführen, so daß die Perforationsöffnungen ein ausreichend großes Volumen zur Tropfenbildung zur Verfügung stellen. Die Biegsamkeit und Elastizität des Bandes wird durch geeignete Wahl der elastischen Mittel bestimmt. Diese Eigenschaften des Bandes werden dabei durch die Dicke der Glieder nicht beeinträchtigt, da diese durch die zwischen den einzelnen Gliedern wirksamen elastischen Mittel gegeben sind. Aus diesem Grunde hängt die Biegsamkeit des Bandes auch nicht von der Wahl des Materials für die Glieder ab. Diese können somit aus einem besonders alterungsbeständigen Material hergestellt sein, ohne daß die Biegefähigkeit des Materials ausschlaggebend wäre. Bei einer Beschädigung eines Teils des Bandes, z.B. eines lamellenartigen Glieds, genügt es, unter relativ kleinem zeitlichen Aufwand nur das jeweils defekte Glied auszutauschen, so daß ein unnötig großer Produktionsausfall vermieden wird. Auch die Herstellung des Bandes ist insofern erleichtert, als die lamellenartigen Glieder und die zur Verbindung der Glieder dienenden Mittel einstückig als Profile hergestellt werden können, um dann je nach Bedarf (d.h. der gewünschten Breite des Bandes) abgeschnitten und mit den Öffnungen versehen zu werden.

Aus dem DE-U-85 29 725 ist es zwar bekannt, bei einem Rolladen die einzelnen Lamellen durch elastische Verbindungselemente zu verbinden. Der Werkstoff der elastischen Verbindungselemente ist dabei so bestimmt, daß diese mit den Lamellen verklebt oder verschweißt werden können. Mit einer Vorrichtung zur Herstellung von Granulat hat ein solcher als Einbruchsschutz oder als Schutz vor Sonne dienender Rolladen aber nichts gemeinsam.

In vorteilhafter Weiterbildung der Erfindung weisen die lamellenartigen Glieder an ihren Schmalseiten im wesentlichen parallel zur Längsachse verlaufende hinterschnittene Nuten auf und sind von mittels federnder Elemente verbundenen und in die hinterschnittenen Nuten benachbarter lamellenartiger Glieder eingesetzten Paaren paralleler Stangen zusammengehalten. Damit ist eine wirkungsvolle Verbindung zwischen den einzelnen Gliedern geschaffen. Die Stangen können einfach als Meterware hergestellt und dann bedarfsentsprechend zugeschnitten werden. Sie sind auch einfach und schnell austauschbar. Sollten nur eines oder mehrere der federnden Elemente ausfallen, so können nur diese ausgetauscht werden.

In Weiterbildung der Erfindung sind an der dem Behälter zugewandten Seite des perforierten Bandes Mittel zum Abdichten der Fugen zwischen den lamellenartigen Gliedern vorgesehen. Dadurch wird vermieden, daß Teile der aus dem Behälter ausfließenden fließfähigen Masse in die Fugen zwischen den lamellenartigen Gliedern eindringen und die Funktionsfähigkeit des Bandes beeinträchtigen können.

In weiterer Ausgestaltung der Erfindung ist vorteilhafterweise vorgesehen, daß die Mittel zum Abdichten elastisch sind. Dadurch ist in jeder Biegephase des Bandes eine Abdichtung der Fugen zwischen den lamellenartigen Gliedern gewährleistet.

In besonders vorteilhafter Ausgestaltung der Erfindung sind an der dem Behälter abgewandten Seite des perforierten Bandes zwischen benachbarten lamellenartigen Gliedern wirksame Mittel zur Ausrichtung der lamellenartigen Glieder vorgesehen. Dadurch wird eine Zentrierung und Führung der lamellenartigen Glieder untereinander erreicht, so daß Verschiebungen einzelner Glieder senkrecht zur Bandebene vermieden werden.

Die Erfindung ist anhand eines Ausführungsbeispiels in der Zeichnung dargestellt und wird im folgenden näher erläutert. Es zeigen:
- Fig. 1: eine schematische Seitenansicht einer erfindungsgemäßen Vorrichtung zur Herstellung von Granulat,
- Fig. 2: die Draufsicht auf die Vorrichtung der Fig. 1,
- Fig. 3: die vergrößerte Darstellung eines Schnitts durch das erfindungsgemäße perforierte Band der Vorrichtung der Fig. 2 gemäß der Schnittlinie III-III,
- Fig. 4: eine Draufsicht auf ein mit federnden Elementen verbundenes Stangenpaar, und
- Fig. 5: einen Schnitt durch das Stangenpaar der Fig. 4 gemäß Schnittlinie V-V.

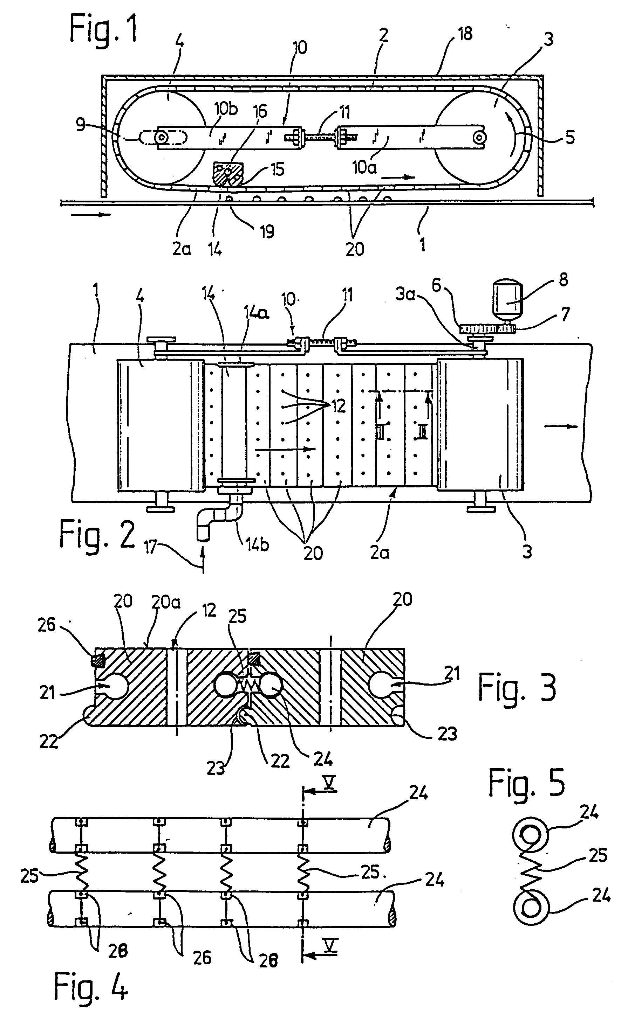

In den Fig. 1 und 2 ist oberhalb eines Förderbands (1), insbesondere eines als Kühlband ausgebildeten Stahlbands, ein endlos umlaufendes Band (2) an zwei Umlenktrommeln (3 und 4) geführt, die in nicht näher dargestellter Weise oberhalb des Förderbands (1) in einem Traggestell gelagert sind. Die Umlenktrommel (3) ist im Sinn des Pfeiles (5) angetrieben. Fig. 2 zeigt, daß dies dadurch geschieht, daß die Lagerwelle (3a) der Umlenktrommel (3) mit einem Zahnrad (6) versehen ist, das über ein Ritzel (7) und einen Elektromotor (8) angetrieben ist. Es ist aber genauso möglich, einen Ketten- oder Riemen-, insbesondere Zahnriemenbetrieb zu verwenden.

Die beiden Umlenktrommeln (3 und 4) sind so gelagert, daß ihr gegenseitiger Abstand in einem bestimmten Umfang einstellbar ist. Zu diesem Zweck ist die Umlenktrommel (4) in einem in Fig. 1 gestrichelt angedeuteten Längsschlitz (9) gehalten. Der Abstand zwischen den Umlenktrommeln (3 und 4) kann über einen aus den beiden Teilen (10a und 10b) bestehenden Abstandshalter (10), der mit einem Schraubbolzen (11) versehen ist, eingestellt werden. Solche Abstandshalter sind auf beiden Seiten der Umlenktrommeln vorgesehen.

Das umlaufende Band (2), von dem ein Ausschnitt des unteren Trums (2a) in Fig. 3 gezeigt ist, besteht aus einer Vielzahl von lamellenartigen Gliedern (20), die, wie Fig. 3 zeigt, parallel zu ihren Längsachsen mit ihren Schmalseiten aneinandergesetzt sind. Da das Band (2) aus vielen Gliedern (20) zusammengesetzt ist, kann es auch bei kleinen Abmessungen der Umlenktrommeln (3 und 4) um diese gelegt und um diese geführt werden.

An ihren Schmalseiten weisen die lamellenartigen Glieder jeweils in Längsrichtung verlaufende und sich im wesentlichen über die gesamte Länge jedes lamellenartigen Glieds (20) erstreckende hinterschnittene Nuten (21) auf. Zum Verbinden zweier benachbarter lamellenartiger Glieder (20) sind Paare paralleler Stangen (24) vorgesehen, die mittels federnder Elemente (25) miteinander verbunden sind (vergl. Fig. 4). Zum Verbinden zweier lamellenartiger Glieder (20) werden diese mit ihren Schmalseiten so aneinandergesetzt und gegeneinander ausgerichtet, daß die hinterschnittenen Nuten (21) auf gleicher Höhe zu liegen kommen und einen Hohlraum mit im wesentlichen hantelförmigem Querschnitt bilden. Der Hinterschnitt der Nuten (21) ist im wesentlichen kreisförmig und weist einen Durchmesser auf, der leicht über dem Durchmesser der parallelen Stangen (24) liegt. Ein mittels federnder Elemente (25) verbundenes Paar paralleler Stangen (24) wird dann in den durch die hinterschnittenen Nuten (21) gebildeten Hohlraum eingeschoben. Durch die Verengung der Nut zur Schmalseite des lamellenartigen Glieds (20) ist jede der Stangen (24) senkrecht zu ihrer Längsachse festgelegt, so daß eine indirekte Verbindung der benachbarten lamellenartigen Glieder (20) über die federnden Mittel (25) erfolgt.

Die lamellenartigen Glieder (20) weisen jeweils durchgehende Öffnungen (12) auf, die im Ausführungsbeispiel kreisrunden Querschnitt haben. Diese Öffnungen (12) bilden beim zusammengesetzten Band (2) dessen Perforationen. Das Band (2) liegt, wie Fig. 1 zeigt, an der gewölbten Außenfläche eines Rohrkörpers (14) an, der auf der dem unteren Trum (2a) zugewandten Außenfläche mit einem quer zum Band (2) verlaufenden Schlitz (15) versehen ist, der von dem dicht anliegenden perforierten Band (2) abgeschlossen oder, wenn jeweils eine Reihe von Öffnungen (12) vorbeigeführt wird, durch diese Öffnungen freigegeben wird.

Der Rohrkörper (14) besitzt einen Führungskanal (16) für die Zuführung von viskoser und fließfähiger Masse, die in Richtung des Pfeiles (17) in fließfähigem, insbesondere erhitztem Zustand zugeführt wird. Von diesem Führungskanal (16) aus gehen Bohrungen ab, die in den als offene Nut ausgebildeten Schlitz (15) münden. Wird daher der Führungskanal (16) mit dem zu vertropfendem Material beschickt, so kann dieses in den Schlitz (15) und von dort aus durch die Öffnungen (12) auf das als Kühlband ausgebildete Förderband (1) abtropfen. Die Dicke der lamellenartigen Glieder ist dabei so gewählt, daß in den Öffnungen (12) genügend Volumen zur Verfügung steht, um die aus dem Rohrkörper (14) kommende, beim Ausführungsbeispiel heiße, viskose Masse, in einer bestimmten Menge aufzunehmen und dann tropfenförmig auf die Oberfläche des Kühlbandes (1) abzugeben, wo die Masse zu kleinen linsenförmigen Körpern (19) erstarrt.

Um in der gesamten Vorrichtung die Temperatur der zu vertropfenden Masse aufrechtzuerhalten, ist der Rohrkörper (14) in nicht näher dargestellter Weise beheizt. Die gesamte Vorrichtung ist außerdem durch eine Abdeckhaube (18) abgeschlossen. Einweiser (14a und 14b) in der Form von radial abstehenden Rippen dienen dazu, das Produkt, daß aus dem Rohrkörper (14) austritt, auf die Bandinnenfläche mit den Öffnungen (12) zurückzudrängen.

Um vorzubeugen, daß Teile der aus dem Rohrkörper (14) austretenden Masse in die zwischen einzelnen lamellenartigen Gliedern (20) vorhandenen Fugen eindringen können, sind an der dem Rohrkörper (14) zugewandten Seite (20a) des perforierten Bands (2) Mittel (26) zum Abdichten dieser Fugen vorgesehen. Bei den Mitteln (26) zum Abdichten handelt es sich beim in der Fig. 3 gezeigten Ausführungsbeispiel um elastische Gummileisten, die sich im wesentlichen über die gesamte Länge jedes lamellenartigen Bands (20) erstrecken und kurz unter der Oberkante an der Schmalseite angeordnet sind. Die durch die federnden Mittel (25) zusammengehaltenen lamellenartigen Glieder (20) drücken die zwischen ihnen befindliche Abdichtleiste zusammen, so daß keine Masse von der Oberseite her eindringen kann. Beim Umlenken des Bands (2) um die Umlenktrommeln (3, 4) werden die zwischen den Gliedern (20) befindlichen Abdichtleisten noch weiter zusammengedrückt. Es ist daher vorteilhaft, wenn die Abdichtleisten aus einem Material bestehen, das elastisch genug ist, sich im Anschluß an die Umlenkung wieder auszudehnen, so daß eine gute Abdichtung der Fugen gewährleistet ist.

Wie ebenfalls aus der Fig. 3 ersichtlich ist, weisen die lamellenartigen Glieder (20) an der dem Rohrkörper (14) abgewandten Seite des perforierten Bands (2) Mittel (22, 23) zur Ausrichtung der lamellenartigen Glieder (20) auf. Im dargestellten Ausführungsbeispiel handelt es sich bei den Mitteln (22, 23) zur Ausrichtung um Nut-Zapfen-Führungen. Jedes der lamellenartigen Glieder (20) weist an der Unterkante einer Schmalseite einen sich im wesentlichen über die gesamte Länge des lamellenartigen Glieds erstreckenden Zapfen (22) mit halbkreisförmigem Querschnitt auf. An der Unterkante der gegenüberliegenden Schmalseite ist eine entsprechende sich über die gesamte Länge des lamellenartigen Glieds (20) erstreckende Nut (23) mit halbkreisförmigem Querschnitt vorgesehen. Bei aneinandergesetzten lamellenartigen Gliedern (20) greift somit der Zapfen (22) eines Glieds in die Nut (23) des benachbarten Glieds. Durch die daraus resultierende Beschränkung der Beweglichkeit der Glieder (20) senkrecht zur Bandebene ist eine Ausrichtung und Führung der Glieder vor allem beim Vorbeilaufen am Rohrkörper (14) gegeben.

Fig. 5 zeigt eine Möglichkeit, wie die Stangen (24) mittels der federnden Elemente (25), im gezeigten Ausführungsbeispiel Spiralfedern, zusammengehalten werden können. Dabei sind an den Stangen (24) jeweils auf gleicher Höhe und in regelmäßigem Abstand kreisringförmige Einschnürungen (28) vorgesehen, in welche die Enden jeder Spiralfeder durch Umbiegen eingesetzt werden können. Darüber hinaus können die einzelnen federnden Elemente (25) noch durch Verkleben in den Einschnürungen (28) gesichert werden. Anstatt der Verwendung von Spiralfedern ist jedoch auch die Verwendung von Gummi- oder Kunststoffringen möglich, sofern sie die erforderliche Elastizität aufweisen. Die in die hinterschnittenen Nuten (21) der lamellenartigen Glieder (20) eingeführten Paare paralleler Stangen (24) können in den Gliedern jeweils stirnseitig durch nicht dargestellte Schrauben oder Pfropfen o.ä. gesichert werden.

## Patentansprüche

1. Vorrichtung zur Herstellung von Granulat aus fließfähigen viskosen Massen, die in Tropfenform gebracht werden und erstarren oder gelieren, bestehend aus einem mit der fließfähigen Masse beschickten Behälter mit Ausflußöffnungen, die zur Tropfenbildung intermittierend durch ein periodisch daran vorbeigeführtes in der Art einer Perforation mit Öffnungen versehenes Band geöffnet oder geschlossen werden, dadurch gekennzeichnet, daß das Band (2) aus einer Vielzahl von lamellenartigen Gliedern (20) zusammengesetzt ist, die mit den Öffnungen (12) versehen sind und mit ihren Schmalseiten aneinander grenzen und dort elastisch miteinander verbunden sind.

2. Vorrichtung nach Anspruch 1, dadurch gekennzeichnet, daß die lamellenartigen Glieder (20) an ihren Schmalseiten im wesentlichen parallel zur Längsachse verlaufende hinterschnittene Nuten (21) aufweisen und von mittels federnder Elemente (25) verbundenen und in die hinterschnittenen Nuten (21) benachbarter lamellenartiger Glieder (20) eingesetzten Paaren paralleler Stangen (24) zusammengehalten sind.

3. Vorrichtung nach Anspruch 1 oder 2, dadurch gekennzeichnet, daß an der dem Behälter (14) zugewandten Seite des perforierten Bands (2) Mittel (26) zum Abdichten der Fugen zwischen den lamellenartigen Gliedern (20) vorgesehen sind.

4. Vorrichtung nach Anspruch 3, dadurch gekennzeichnet, daß die Mittel (26) zum Abdichten elastisch sind.

5. Vorrichtung nach einem der Ansprüche 1 bis 4, dadurch gekennzeichnet, daß an der dem Behälter abgewandten Seite des perforierten Bands (2) zwischen benachbarten lamellenartigen Gliedern (20) wirksame Mittel (22, 23) zur Ausrichtung der lamellenartigen Glieder (20) vorgesehen sind.

6. Vorrichtung nach Anspruch 5, dadurch gekennzeichnet, daß die Mittel (22, 23) zur Ausrichtung Nut-Zapfen-Führungen sind.

## Claims

1. A device for producing granulate from free-flowing, viscous masses, which are brought to droplet state and set or coagulate, consisting of a container charged with the free-flowing mass and having outflow orifices, which, for the purpose of forming droplets, are intermittently opened or closed by means of a belt provided with orifices in a perforation type layout which is periodically fed alongside, characterised in that the belt (2) is made up of a plurality of plate-like members (20) provided with orifices (12), the narrow sides thereof bordering one another and being resiliently joined to one another at that point.

2. A device as claimed in claim 1, characterised in that at their narrow ends, the plate-like members (20) have recessed grooves (21) extending essentially parallel with the longitudinal axis and are held together by pairs of parallel rods (24) inserted in the recessed grooves (21) of adjacent plate-like members (20) and joined by means of resilient elements (25).

3. A device as claimed in claim 1 or 2, characterised in that means (26) are provided on the face of the perforated belt (2) facing the container (14) in order to seal the joints between the plate-like members (20).

4. A device as claimed in claim 3, characterised in that the sealing means (26) are resilient.

5. A device as claimed in one of claims 1 to 4, characterised in that active means (22, 23) are provided between adjacent plate-like members (20) on the face of the perforated belt (2) remote from the container in order to align the plate-like members (20).

6. A device as claimed in claim 5, characterised in that the aligning means (22, 23) are groove-and-shoulder guides.

## Revendications

1. Dispositif pour fabriquer des granulés à partir de masses visqueuses fluides, qui sont mises sous la forme de gouttes et se solidifient ou gélifient, constitué par un récipient chargé par la masse fluide et comportant des ouvertures de sortie, qui sont ouvertes ou fermées de façon intermittente pour la formation de gouttes par une bande qui passe périodiquement devant ces ouvertures et est pourvue d'ouvertures, à la manière de perforations, caractérisé en ce que la bande (2) est formée par l'assemblage d'une multiplicité d'éléments en forme de lamelles (20), qui sont pourvus d'ouvertures (12) et sont contigus par leurs petits côtés et sont reliés élastiquement entre eux en cet endroit.

2. Dispositif selon la revendication 1, caractérisé en ce que les éléments en forme de lamelles (20) comportent, sur leurs petits côtés, des rainures en contre-dépouille (21) qui s'étendent essentiellement parallèlement à l'axe longitudinal, et sont maintenus assemblés par des couples de tiges parallèles (24), qui sont reliées au moyen d'éléments élastiques (25) et sont insérées dans les rainures en contre-dépouille (21) d'éléments en forme de lamelles (20) voisins.

3. Dispositif selon la revendication 1 ou 2, caractérisé en ce que sur la face de la bande perforée (2), tournée vers le récipient (14), sont prévus des moyens (26) pour étanchéifier les joints entre les éléments en forme de lamelles (20).

4. Dispositif selon la revendication 3, caractérisé en ce que les moyens d'étanchéification (26) sont élastiques.

5. Dispositif selon l'une des revendications 1 à 4, caractérisé en ce que sur la face de la bande perforée (2) tournée à l'opposé du récipient, des moyens efficaces (22,23) pour aligner les éléments en forme de lamelles (20) sont prévus entre des éléments en forme de lamelles voisins (20).

6. Dispositif selon la revendication 5, caractérisé en ce que les moyens d'alignement (22,23) sont des guides du type à rainure et languette.
